(19)

Europäisches Patentamt
European Patent Office
Office européen des brevets

(11) **EP 4 477 305 A1**

(12) **EUROPEAN PATENT APPLICATION**

(43) Date of publication:
**18.12.2024 Bulletin 2024/51**

(21) Application number: **24180845.0**

(22) Date of filing: **07.06.2024**

(51) International Patent Classification (IPC):
*B01J 4/04* (2006.01)    *B01J 7/00* (2006.01)
*B01J 15/00* (2006.01)    *B01J 19/00* (2006.01)
*B64G 1/52* (2006.01)    *F28D 15/04* (2006.01)

(52) Cooperative Patent Classification (CPC):
**B01J 4/04; B01J 7/00; B01J 15/005; B01J 19/002;
B64G 1/52; F28D 15/04;** F28D 2021/0043

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.06.2023 US 202318334172**

(71) Applicant: **Hamilton Sundstrand Corporation
Charlotte, NC 28217-4578 (US)**

(72) Inventor: **KHALIL, Yehia F.
Glastonbury, CT, 06033 (US)**

(74) Representative: **Dehns
10 Old Bailey
London EC4M 7NG (GB)**

(54) **SELF-REGULATING AND GRAVITY-INDEPENDENT DEVICE FOR HYDROGEN RECOMBINING WITH AN INTEGRATED PASSIVE HEAT SINK FOR LOW-EARTH ORBIT AND DEEP-SPACE EXPLORATION SPACECRAFT**

(57)    The present disclosure provides for hydrogen recombiner assemblies utilizing an integrated passive heat sink (14). More particularly, the present disclosure provides for flameless hydrogen recombiner assemblies utilizing an integrated passive heat sink (14) to convert leaked hydrogen (e.g., inside a spacecraft) to water vapor. In example embodiments, the present disclosure provides for self-regulating and gravity-independent hydrogen recombiner assemblies having an integrated passive heat sink (14) for low-earth orbit (LEO) and deep-space exploration crewed spacecraft, with the hydrogen recombiner assemblies configured to convert leaked hydrogen (e.g., inside a spacecraft) to water vapor.

FIG. 1

EP 4 477 305 A1

**Description**

TECHNICAL FIELD

The present disclosure relates to hydrogen recombiner assemblies utilizing an integrated passive heat sink and, more particularly, to flameless hydrogen recombiner assemblies utilizing an integrated passive heat sink to convert leaked hydrogen (e.g., inside a spacecraft) to water vapor.

BACKGROUND

In general, for low-earth orbit (LEO) crewed spacecraft such as the international space station (ISS), hydrogen ($H_2$) is produced via water electrolysis in the oxygen generation assembly (OGA). For deep-space exploration (such as the Moon and Mars missions), $H_2$ is generated via the advanced oxygen generation assembly (AOGA) included in the crewed Orion spacecraft (NASA's Artemis program). There is always a potential for a $H_2$ leak from the OGA or the AOGA to form an explosive (e.g., ignition followed by detonation) gaseous mixture with oxygen in the air contained in the crewed cabin, and thus there is a potential for catastrophic hazards (e.g., leading to fatalities and/or loss of mission).

BRIEF DESCRIPTION

The present disclosure provides for hydrogen recombiner assemblies utilizing an integrated passive heat sink. More particularly, the present disclosure provides for flameless hydrogen recombiner assemblies utilizing an integrated passive heat sink to convert leaked hydrogen (e.g., inside a spacecraft) to water vapor.

In example embodiments, the present disclosure provides for self-regulating and gravity-independent hydrogen recombiner assemblies having an integrated passive heat sink for low-earth orbit (LEO) and deep-space exploration spacecraft, with the hydrogen recombiner assemblies configured to convert leaked hydrogen (e.g., inside a spacecraft) to water vapor.

The present disclosure provides for a hydrogen recombiner assembly including a hydrogen recombiner integrated with a passive heat sink, the passive heat sink comprising a heat transfer working fluid, and the hydrogen recombiner comprising a catalyst, and wherein the hydrogen recombiner is configured to convert leaked hydrogen to water vapor.

In addition to one or more of the features described, or as an alternative to any of the foregoing embodiments, the hydrogen recombiner is a flameless hydrogen recombiner.

In addition to one or more of the features described, or as an alternative to any of the foregoing embodiments, the catalyst comprises a platinum catalyst.

In addition to one or more of the features described, or as an alternative to any of the foregoing embodiments, the passive heat sink comprises an evacuated metallic cylindrical tube that is sealed and filled with the heat transfer working fluid, with the heat transfer working fluid configured to flow in an annular space of the passive heat sink.

In addition to one or more of the features described, or as an alternative to any of the foregoing embodiments, the heat transfer working fluid is water, ammonia or methanol.

In addition to one or more of the features described, or as an alternative to any of the foregoing embodiments, the passive heat sink comprises aluminum or stainless steel.

In addition to one or more of the features described, or as an alternative to any of the foregoing embodiments, the passive heat sink comprises a metal tube.

In addition to one or more of the features described, or as an alternative to any of the foregoing embodiments, wherein an inner wall of the passive heat sink includes a capillary porous wick lining, the capillary porous wick lining configured to enable transport of heat along a length of the passive heat sink.

In addition to one or more of the features described, or as an alternative to any of the foregoing embodiments, the hydrogen recombiner assembly is self-regulating and gravity-independent.

In addition to one or more of the features described, or as an alternative to any of the foregoing embodiments, the hydrogen recombiner assembly is positioned inside a spacecraft.

The present disclosure provides for a method for operating a hydrogen recombiner including integrating a hydrogen recombiner with a passive heat sink, the passive heat sink comprising a heat transfer working fluid, and the hydrogen recombiner comprising a catalyst, and utilizing the hydrogen recombiner to convert leaked hydrogen to water vapor.

In addition to one or more of the features described, or as an alternative to any of the foregoing embodiments, the hydrogen recombiner is a flameless hydrogen recombiner.

In addition to one or more of the features described, or as an alternative to any of the foregoing embodiments, the catalyst comprises a platinum catalyst.

In addition to one or more of the features described, or as an alternative to any of the foregoing embodiments, wherein the passive heat sink comprises an evacuated metallic cylindrical tube that is sealed and filled with the heat transfer working fluid, with the heat transfer working fluid configured to flow in an annular space of the passive heat sink.

In addition to one or more of the features described, or as an alternative to any of the foregoing embodiments, the heat transfer working fluid is water, ammonia or methanol.

In addition to one or more of the features described, or as an alternative to any of the foregoing embodiments, the passive heat sink comprises aluminum or stainless steel.

In addition to one or more of the features described, or as an alternative to any of the foregoing embodiments, the passive heat sink comprises a metal tube.

In addition to one or more of the features described, or as an alternative to any of the foregoing embodiments, wherein an inner wall of the passive heat sink includes a capillary porous wick lining, the capillary porous wick lining configured to enable transport of heat along a length of the passive heat sink.

In addition to one or more of the features described, or as an alternative to any of the foregoing embodiments, the hydrogen recombiner assembly is self-regulating and gravity-independent.

In addition to one or more of the features described, or as an alternative to any of the foregoing embodiments, the hydrogen recombiner assembly is positioned inside a spacecraft.

The above described and other features are exemplified by the following figures and detailed description.

Any combination or permutation of embodiments is envisioned. Additional features, functions and applications of the disclosed assemblies, systems and methods of the present disclosure will be apparent from the description which follows, particularly when read in conjunction with the appended figures. All references listed in this disclosure are hereby incorporated by reference in their entireties.

BRIEF DESCRIPTION OF THE DRAWINGS

The following descriptions should not be considered limiting in any way. With reference to the accompanying drawings, like elements are numbered alike.

Features and aspects of embodiments are described below with reference to the accompanying drawings, in which elements are not necessarily depicted to scale.

Example embodiments of the present disclosure are further described with reference to the appended figures. It is to be noted that the various features, steps, and combinations of features/steps described below and illustrated in the figures can be arranged and organized differently to result in embodiments which are still within the scope of the present disclosure. To assist those of ordinary skill in the art in making and using the disclosed assemblies, systems and methods, reference is made to the appended figures, wherein:

FIG. 1 is a cross-sectional side view of an example hydrogen recombiner assembly, according to certain embodiments of the present disclosure;

FIG. 2 is a cross-sectional side view of an example hydrogen recombiner, according to certain embodiments of the present disclosure;

FIG. 3 is a cross-sectional top view of an example hydrogen recombiner assembly, according to certain embodiments of the present disclosure;

FIG. 4 is a cross-sectional bottom view of an example hydrogen recombiner assembly, according to certain embodiments of the present disclosure; and

FIG. 5 is a side perspective view of an example hydrogen recombiner assembly, according to certain embodiments of the present disclosure.

DETAILED DESCRIPTION

A detailed description of one or more embodiments of the disclosed apparatus and method are presented herein by way of exemplification and not limitation with reference to the figures.

The example embodiments disclosed herein are illustrative of spacecraft hydrogen recombiner assemblies, and systems of the present disclosure and methods/techniques thereof. It should be understood, however, that the disclosed embodiments are merely examples of the present disclosure, which may be embodied in various forms. Therefore, details disclosed herein with reference to example spacecraft hydrogen recombiner assemblies and associated processes/techniques of fabrication/assembly and use are not to be interpreted as limiting, but merely as the basis for teaching one skilled in the art how to make and use the assemblies/systems and/or alternative assemblies/systems of the present disclosure.

The present disclosure provides for spacecraft hydrogen recombiner assemblies utilizing an integrated passive heat sink. More particularly, the present disclosure provides for flameless hydrogen recombiner assemblies utilizing an integrated passive heat sink to convert leaked hydrogen (e.g., inside a spacecraft) to water vapor.

In example embodiments, the present disclosure provides for self-regulating and gravity-independent hydrogen recombiner assemblies having an integrated passive heat sink for low-earth orbit (LEO) and deep-space exploration spacecraft, with the hydrogen recombiner assemblies configured to convert leaked hydrogen (e.g., inside a spacecraft) to water vapor.

As noted, current practice provides that during low-earth orbit (LEO) or deep-space exploration, there is always a potential for a $H_2$ leak from the oxygen generation assembly (OGA) or the advanced OGA (AOGA) to form an explosive (e.g., ignition followed by detonation) gaseous mixture.

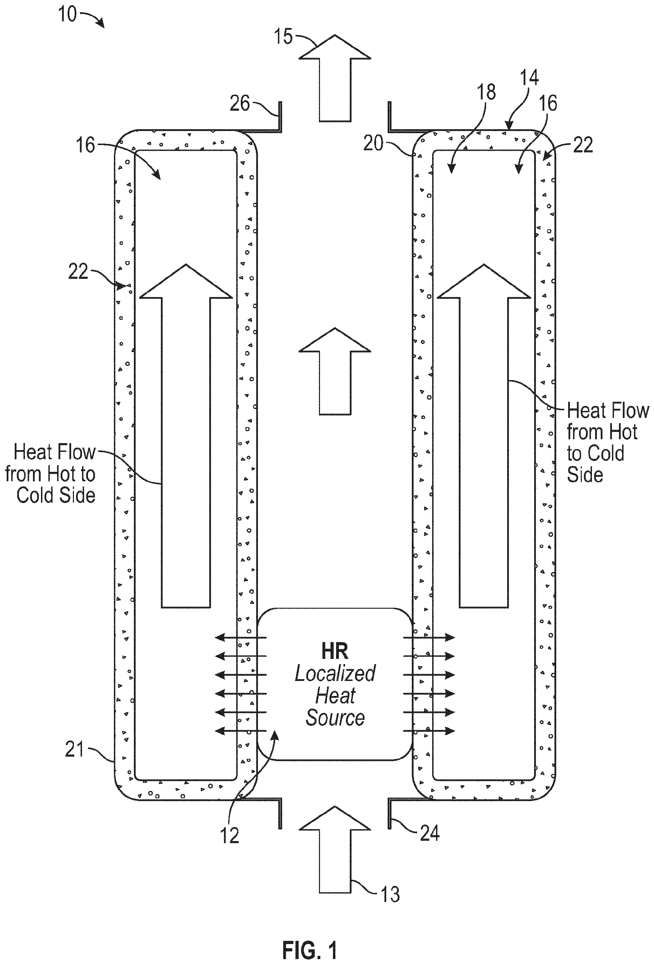

In example embodiments and as shown in FIG. 1, the present disclosure provides to spontaneously convert (e.g., via an oxidative reaction) in real-time leaked $H_2$ inside a spacecraft or the like to water vapor ($H_2O$) using a hydrogen recombiner 12 (e.g., a flameless $H_2$ recombiner 12) integrated with a passive heat sink 14. The oxidation of $H_2$ to $H_2O$ is exothermic in the presence of a catalysts (e.g. a platinum catalyst). In example embodiments, the hydrogen recombiner 12 includes a hydrogen recombiner bed 12, with the bed 12 comprising a honeycomb porous ceramic material coated by a platinum catalyst.

In certain embodiments and as discussed further below, the passive heat sink 14 is an evacuated metallic cylindrical tube that is sealed and filled with a heat transfer working fluid 16 (e.g., water, ammonia, methanol, etc.) flowing in an annular space 18 of the passive heat sink 14. For example, the passive heat sink 14 can be a metal tube or the like, and the metal of the passive heat sink tube 14 can be aluminum or stainless steel. An inner wall 20 and/or an outer wall 21 of example passive heat sink tube 14 includes a capillary porous wick lining 22 to enable transport of heat along a length of the tube 14 (see FIG. 1). In example embodiments, it is noted that porous wick lining 22 can comprise sintered metal powder, very fine metal fibers, or composites.

FIG. 1 is a cross-sectional side view of an example hydrogen recombiner assembly, according to certain embodiments of the present disclosure.

In general, hydrogen recombiner assembly 10 can be used to spontaneously convert (e.g., via an oxidative reaction) in real-time leaked $H_2$ (via input stream 13) inside a spacecraft or the like to water vapor ($H_2O$) using a hydrogen recombiner 12 (e.g., a flameless $H_2$ recombiner 12) integrated with a passive heat sink 14. The input stream 13 includes air and hydrogen gas (e.g., leaked hydrogen gas), and the output stream 15 includes air and water vapor.

In general and as shown in FIG. 1, example hydrogen recombiner assembly 10 includes an inlet 24 for input stream 13, and an outlet 26 for output stream 15. As noted, example passive heat sink 14 can be an evacuated metal tube 14 (e.g., aluminum or stainless steel) lined with a porous wick 22 and contains the heat transfer working fluid 16. The metal tube 14 can be tightly sealed at both ends.

It is noted that vaporization of the heat transfer working fluid 16 absorbs heat released from the hydrogen recombiner 12. As the working fluid 16 is vaporized at the evaporator and/or recombiner 12, the vapor pressure builds up, forcing vapor to flow axially upward in sink 14. The porous wick liner 22 carries the condensed heat transfer working fluid 16 back to the hot side via the capillary surface tension pumping (e.g., capillary wicking) of wick lining 22. Moreover, the working fluid 16 condenses from vapor to liquid releasing heat through the metal casing of assembly 10.

The reaction heat from leaked hydrogen oxidation is used to put the assembly 10 in a self-regulating motion driven by the temperature difference, and hence, density difference of working fluid 16 in the vaporization/condensation cycle of assembly 10. During this self-regulating and gravity independent operation, the working fluid 16 is vaporized at the location of the recombiner 12 heat source, which results in a local increase in the vapor pressure that forces vapor to travel along the length of the tube 14 toward a passive heat sink condenser region where heat is rejected via condensation of the working fluid 16.

As shown in FIG. 1, the continuous cyclical operation of the passive heat sink 14 is passively achieved since the condensed liquid 16 is returned to the heat source section by capillary action in the porous wick liner 22 that connects the sink 14 vaporization and condensation sections. The capillary pressure generated by the pores of the wick material 22 should overcome the viscous and inertial pressure drops along the vapor and liquid flow paths to sustain the sink 14 self-regulation operation. As noted, the wick material 22 can be sintered metallic powder, thin metal fibers, composites, etc.

FIG. 1 shows heat energy being absorbed from the combiner 12 heat source and being rejected from the sink condensing side into the heat sink 14. When the vapor-phase working fluid 16 is condensed, the liquid flows through the pores of the wick liner via capillary pumping action to the sink heat-source side where the fluid 16 is vaporized and, as a result, absorbs the heat generated from the recombiner 12.

As heat energy is absorbed, the fluid 16 evaporates and the vapor phase flows upward since it is lighter in density to the sink colder side where it is cooled via heat rejection through the wall 21 of the sink 14. Thus, the vaporization and condensation cycle continues in a self-sustaining manner. The wick liner 22 of the sink 14 enables the return of the condensed fluid 16 to the hot side through the wick liner 22 by means of the aforementioned capillary action.

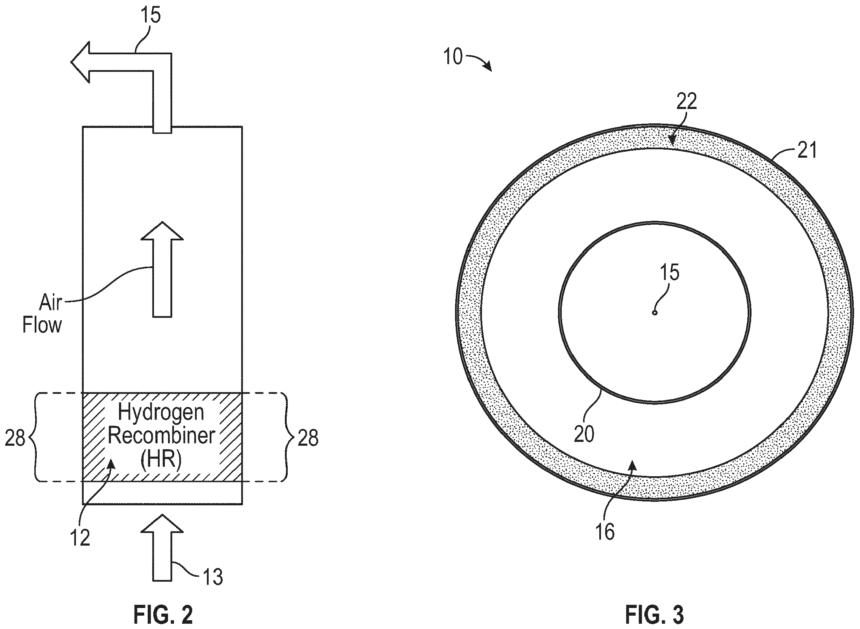

As shown in FIG. 2, the hydrogen recombiner 12 includes a catalytic region 28 that represents the heat source of assembly 10. The recombiner 12 exothermic reaction is:

$$H2 + \tfrac{1}{2} O2 \rightarrow H2O + Heat$$

$$(\Delta H)_R = -241.8 \text{ kJ/mole H2}$$

FIG. 3 is a cross-sectional top view of an example hydrogen recombiner assembly 10, according to certain embodiments of the present disclosure. In FIG. 3, the flow path of the working fluid 16 is inside the passive heat sink annular tube 14.

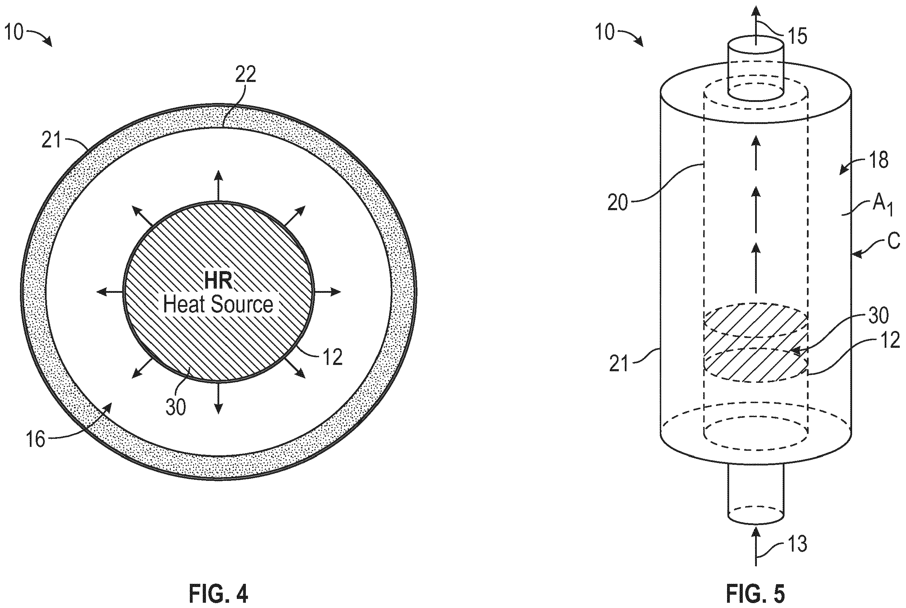

FIG. 4 is a cross-sectional bottom view of an example hydrogen recombiner assembly 10, according to certain embodiments of the present disclosure.

In addition to use of assembly 10 in space applications and without limitation, the disclosed integrated design of assembly 10 can also be used in ships and submarines that use polymer electrolyte membrane (PEM) electrolyzers for $O_2$ and $H_2$ generation. These electrolyzers are typically contained in confined spaces (e.g., containers) and hydrogen leakage presents potential catastrophic hazards (e.g., fire and explosion) leading to fatalities and/or property damage.

The disclosed integrated design of assembly 10 can also be used for real-time removal of leaked hydrogen in the emerging hybrid-electric and all-electric aircraft or the like. Both designs of such next generation aircraft use on-board stored hydrogen to propel the aircraft by either burning hydrogen as a fuel in the jet engine or by feeding hydrogen to on-board PEM fuel cell stacks that power electric motors that propel the aircraft.

There are many benefits of the assemblies 10, systems and methods of the present disclosure, including, without limitation: no external pumping power needed; the assemblies 10 are self-regulating (e.g., no flow control devices are needed); the example assemblies 10 have no moving parts and, hence, are vibration free; the assemblies 10 operate with a small temperature difference; the passive heat sink 14 works independent of gravity; and/or the difference in enthalpy of the two phases of heat transfer working fluid 16 puts the cooling circuit into a spontaneous self-driven cyclic motion.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

The term "about" is intended to include the degree of error associated with measurement of the particular quantity based upon the equipment available at the time of filing the application.

The ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combinations" is inclusive of blends, mixtures, alloys, reaction products, and the like. The terms "first," "second," and the like, do not denote any order, quantity, or importance, but rather are used to distinguish one element from another. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof' is open and includes any combination comprising at least one of the listed components or properties optionally together with a like or equivalent component or property not listed.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

Although the assemblies, systems and methods of the present disclosure have been described with reference to example embodiments thereof, the present disclosure is not limited to such example embodiments and/or implementations. Rather, the assemblies, systems and methods of the present disclosure are susceptible to many implementations and applications, as will be readily apparent to persons skilled in the art from the disclosure hereof. The present disclosure expressly encompasses such modifications, enhancements and/or variations of the disclosed embodiments. Since many changes could be made in the above construction and many widely different embodiments of this disclosure could be made without departing from the scope thereof, it is intended that all matter contained in the drawings and specification shall be interpreted as illustrative and not in a limiting sense. Additional modifications, changes, and substitutions are intended in the foregoing disclosure. Accordingly, it is appropriate that the appended claims be construed broadly and in a manner consistent with the scope of the disclosure.

## Claims

1. A hydrogen recombiner assembly comprising:

   a hydrogen recombiner (12) integrated with a passive heat sink (14), the passive heat sink (14) comprising a heat transfer working fluid, and the hydrogen recombiner (12) comprising a catalyst; and
   wherein the hydrogen recombiner (12) is configured to convert leaked hydrogen to water vapor.

2. The assembly of claim 1, wherein the hydrogen recombiner (12) is a flameless hydrogen recombiner (12).

3. The assembly of claim 1, wherein the catalyst comprises a platinum catalyst.

4. The assembly of claim 1, wherein the passive heat sink (14) comprises an evacuated metallic cylindrical tube that is sealed and filled with the heat transfer working fluid, with the heat transfer working fluid configured to flow in an annular space of the passive heat sink (14).

5. The assembly of claim 1, wherein the heat transfer working fluid is water, ammonia or methanol.

6. The assembly of claim 1, wherein the passive heat sink (14) comprises aluminum or stainless steel, or wherein the passive heat sink (14) comprises a metal tube.

7. The assembly of claim 1, wherein an inner wall of the passive heat sink (14) includes a capillary porous wick lining, the capillary porous wick lining configured to enable transport of heat along a length of the passive heat sink (14).

8. The assembly of claim 1, wherein the hydrogen recombiner assembly is self-regulating and gravity-independent, or wherein the hydrogen recombiner assembly is positioned inside a spacecraft.

9. A method for operating a hydrogen recombiner (12) comprising:

   integrating a hydrogen recombiner (12) with a passive heat sink (14), the passive heat sink (14) comprising a heat transfer working fluid, and the hydrogen recombiner (12) comprising a catalyst; and
   utilizing the hydrogen recombiner (12) to convert leaked hydrogen to water vapor.

10. The method of claim 9, wherein the hydrogen recombiner (12) is a flameless hydrogen recombiner (12), or wherein the catalyst comprises a platinum catalyst.

11. The method of claim 9, wherein the passive heat sink (14) comprises an evacuated metallic cylindrical tube that is sealed and filled with the heat transfer working fluid, with the heat transfer working fluid configured to flow in an annular space of the passive heat sink (14).

**12.** The method of claim 9, wherein the heat transfer working fluid is water, ammonia or methanol.

**13.** The method of claim 9, wherein the passive heat sink (14) comprises aluminum or stainless steel, or wherein the passive heat sink (14) comprises a metal tube.

**14.** The method of claim 9, wherein an inner wall of the passive heat sink (14) includes a capillary porous wick lining, the capillary porous wick lining configured to enable transport of heat along a length of the passive heat sink (14).

**15.** The method of claim 9, wherein the hydrogen recombiner assembly is self-regulating and gravity-independent, or wherein the hydrogen recombiner assembly is positioned inside a spacecraft.

**FIG. 1**

EP 4 477 305 A1

**FIG. 2**

**FIG. 3**

FIG. 5

FIG. 4

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 100 42 250 C1 (FORSCHUNGSZENTRUM JUELICH GMBH [DE]) 4 April 2002 (2002-04-04) | 1,2,9,10 | INV. B01J4/04 B01J7/00 |
| Y | * paragraphs [0011], [0023] - [0027] * * column 5, lines 36-38 * | 3-8, 10-15 | B01J15/00 B01J19/00 B64G1/52 |
| Y | DE 101 50 385 B4 (BALLARD POWER SYSTEMS [DE]) 8 December 2005 (2005-12-08) * claims 1,7 * | 3,10 | F28D15/04 |
| Y | WO 03/054469 A1 (TTH RES INC [US]) 3 July 2003 (2003-07-03) * the whole document * | 3-8, 10-15 | |
| Y | DE 10 2021 128437 B3 (ARIANEGROUP GMBH [DE]) 30 March 2023 (2023-03-30) * claim 1 * | 8,15 | |

TECHNICAL FIELDS
SEARCHED      (IPC)

B01J
B64G
F28F
F28D

The present search report has been drawn up for all claims

| Place of search | Date of completion of the search | Examiner |
|---|---|---|
| Munich | 23 October 2024 | Borello, Ettore |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 24 18 0845

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2024

| Patent document cited in search report | | Publication date | Patent family member(s) | | Publication date |
|---|---|---|---|---|---|
| DE 10042250 | C1 | 04-04-2002 | AT E304207 T1 | | 15-09-2005 |
| | | | CA 2420067 A1 | | 19-02-2003 |
| | | | DE 10042250 C1 | | 04-04-2002 |
| | | | EP 1314166 A1 | | 28-05-2003 |
| | | | ES 2249480 T3 | | 01-04-2006 |
| | | | WO 0219344 A1 | | 07-03-2002 |
| DE 10150385 | B4 | 08-12-2005 | DE 10150385 A1 | | 30-04-2003 |
| | | | US 2003082428 A1 | | 01-05-2003 |
| WO 03054469 | A1 | 03-07-2003 | AR 037974 A1 | | 22-12-2004 |
| | | | AU 2002366705 A1 | | 09-07-2003 |
| | | | TW 200306402 A | | 16-11-2003 |
| | | | US 2003159808 A1 | | 28-08-2003 |
| | | | WO 03054469 A1 | | 03-07-2003 |
| DE 102021128437 | B3 | 30-03-2023 | CA 3180260 A1 | | 02-05-2023 |
| | | | DE 102021128437 B3 | | 30-03-2023 |
| | | | EP 4173972 A1 | | 03-05-2023 |
| | | | JP 7509350 B2 | | 02-07-2024 |
| | | | JP 2023068654 A | | 17-05-2023 |

EPO FORM P0459

For more details about this annex : see Official Journal of the European Patent Office, No. 12/82